# EUROPEAN PATENT APPLICATION

(11) **EP 1 926 018 A2**
(43) Date of publication of application: **28.05.2008**
(21) Application number: 07118944.3
(22) Date of filing: 22.10.2007
(51) Int. Cl.: G06F 3/147

(54) **Display system that reduces power consumption for image processing apparatus having power modes**

(30) Priority: 27.11.2006 KR 20060117714
(71) Applicant: Samsung Electronics Co., Ltd., Suwon-si, Gyeonggi-do 442-743 (KR)
(72) Inventor: Choi, Jin-wook, Yeongtong-gu, Suwon-si, Gyeonggi-do (KR); Baek, Joung-hum, Hwaseong-si, Gyeonggi-do (KR); Cho, Cheon-yong, Suji-gu, Yongin-si, Gyeonggi-do (KR)
(74) Representative: D'Halleweyn, Nele Veerle Trees Gertrudis

(57) **Abstract**

A display system including an imaging processing apparatus which generates an image based on one power mode of a plurality of power modes and a first display apparatus which receives the image from the image processing apparatus and displays the image. The power mode may include a display power management signaling power mode defined by the Video Electronics Standards Association. Further, the imaging processing apparatus and the first display apparatus may communicate by using a universal serial bus (USB).

## Description

### BACKGROUND

### Technical Field

Apparatuses consistent with the present invention relate to a display system including an image processing apparatus and a display apparatus, and more particularly, to a display system that reduces power consumption for each power mode of an image processing apparatus having a plurality of power modes.

### Description of the Related Art

An image processing apparatus generally refers to a computer system. A computer system displays an image on a display apparatus such as a monitor. In order to display the image, the computer system image-processes a video signal through a central processing unit (CPU) and a graphic card provided in the computer system and transmits the image-processed video signal to the monitor. The monitor receives a video signal and modifies the video signal based on vertical synchronization frequency and horizontal synchronization frequency included in the video signal and characteristics of the monitor.

The computer system controls power consumed by the monitor in accordance with a plurality of power modes. In this case, the power mode is generally set to display power management signaling (DPMS) power mode defined by the Video Electronics Standards Association (VESA).

The DPMS classifies a power mode of the monitor as one of a normal mode, a standby mode, a suspended mode, and an off mode according to existence of a horizontal synchronization signal and a vertical synchronization signal of a video signal received from the graphic card.

Recently, a display apparatus such as an electronic frame can access the computer system and display video data stored in the computer system on the electronic frame. However, the computer system and the electronic frame do not communicate with each other using a video graphics array (VGA) method or a digital video/visual interactive (DVI) method, rather the computer system and the electronic frame communicate with each other by using a universal serial bus (USB).

When the computer system and the electronic frame communicate with each other through the USB, the computer system cannot transmit a video signal to the electronic frame by using a conventional transmission method because the electronic frame only reads video data from a memory provided inside the electronic frame to display the video data. That is, the electronic frame cannot receive and process a video signal including image characteristics (e.g. vertical/horizontal synchronization signals) from the computer system. In addition, the electronic frame does not have a module that can perform a power-saving function according to the power mode depending on existence of the vertical synchronization signal and the horizontal synchronization signal, like the DPMS.

Therefore, conventional computer systems cannot control power consumption of the electronic frame based on the DPMS-based power mode.

### SUMMARY

The present invention provides a display system and a method of controlling power consumption of a display apparatus such as an electronic frame.

According to an aspect of the present invention, there is provided a display system comprising: an imaging processing apparatus which generates an image based on one of a plurality of power modes; and a first display apparatus which receives the image from the image processing apparatus and displays the image.

The power mode may include a display power management signaling (DPMS) power mode defined by the Video Electronics Standards Association (VESA).

The first display apparatus may include a backlight unit that emits light for displaying the received image, the image processing apparatus transmits a first control signal including information regarding the power mode, and the first display apparatus may further comprise a display controller which controls turning on/off of the backlight unit based on the first control signal received from the image processing apparatus.

The image processing apparatus may transmit/receive at least one of the image and the first control signal to/from the first display apparatus by using a universal serial bus (USB) transmission method.

The image processing apparatus may generate a compressed image by compressing the image and transmits the compressed image to the first display apparatus, and the first display apparatus expands the compressed image received from the image processing apparatus and displays the expanded image.

The display system may further comprise a second display apparatus connected to the image processing apparatus.

According to another aspect of the present invention, there is provided a display apparatus connected with an image processing apparatus having one power mode among a plurality of power modes, the display apparatus comprising: a transmitting/receiving unit which transmits/receives at least one of an image and a control signal to/from the image processing apparatus by using a universal serial bus (USB) transmission method; a display unit which displays the image received by the transmitting/receiving unit; a backlight unit which emits light to the display unit for displaying the image; and a display controller which turns on/off the backlight unit based on information on the power mode included in the control signal received from the image processing apparatus.

The power mode may include a display power management signaling (DPMS) power mode defined by the Video Electronics Standards Association (VESA).

The display apparatus may further comprise an image expanding unit which receives a compressed image through the transmitting/receiving unit and expands the compressed image, wherein the display controller controls the image expanding unit to expand the compressed image and display the expanded image on the display unit.

The image processing apparatus may be connected with another display apparatus and an image displayed on the display unit includes an image displayed on another display apparatus.

The display apparatus may further comprise a data storage unit which stores data, wherein the display controller displays image data stored in the data storage on the display unit.

According to another aspect of the present invention, there is provided a method for controlling a display apparatus which is connected with an image processing apparatus having a plurality of power modes and includes a backlight unit which emits light to display an image received from the image processing apparatus, the method comprising: receiving an image corresponding to the power mode from the image processing apparatus; displaying the received image; receiving a control signal which includes information on a power mode from the image processing apparatus; and turning on/off the backlight unit according to the power mode information.

The power mode may include a display power management signaling (DPMS) power mode defined by the Video Electronics Standards Association (VESA).

One of the image and the control signal may be is transmitted to and received from the image processing apparatus by using a universal serial bus (USB) transmission method.

The method may further comprise: determining whether the image received from the image processing apparatus is a compressed image; and expanding the image if the image is a compressed image.

### BRIEF DESCRIPTION OF THE DRAWINGS

The above and/or other aspects of the prevent invention will become apparent and more readily appreciated from the following description of exemplary embodiments, taken in conjunction with the accompanying drawings, in which:
FIG. 1 is a perspective view of a display system according to an exemplary embodiment of the present invention;
FIG. 2 is a block diagram of a display system according to an exemplary embodiment of the present invention;
FIG. 3 is a block diagram of an image processing apparatus according to an exemplary embodiment of the present invention;
FIG. 4 is a block diagram of a display apparatus according to an exemplary embodiment of the present invention;
FIG. 5 is a flowchart of a display method using an image processing apparatus having a plurality of power modes and a first display apparatus connected with the image processing apparatus, according to an exemplary embodiment of the present invention;
FIG. 6 is a flowchart of a control method of an image processing apparatus connected with a first display apparatus and having one of the plurality of power modes, according to an exemplary embodiment of the present invention; and
FIG. 7 is a flowchart of a control method of a display apparatus connected with an image processing apparatus having a plurality of power modes and having a backlight unit that emits light for displaying an image received from the image processing apparatus according to an exemplary embodiment of the present invention.

### DETAILED DESCRIPTION OF EXEMPLARY EMBODIMENTS OF THE PRESENT INVENTION

Reference will now be made in detail to exemplary embodiments of the present invention, examples of which are illustrated in the accompanying drawings, wherein like reference numerals refer to like elements throughout. The exemplary embodiments of the present invention are described below so as to explain the present invention by referring to the figures.

Hereinafter, an exemplary embodiment of the present invention will be described in detail with reference to the accompanying drawings.

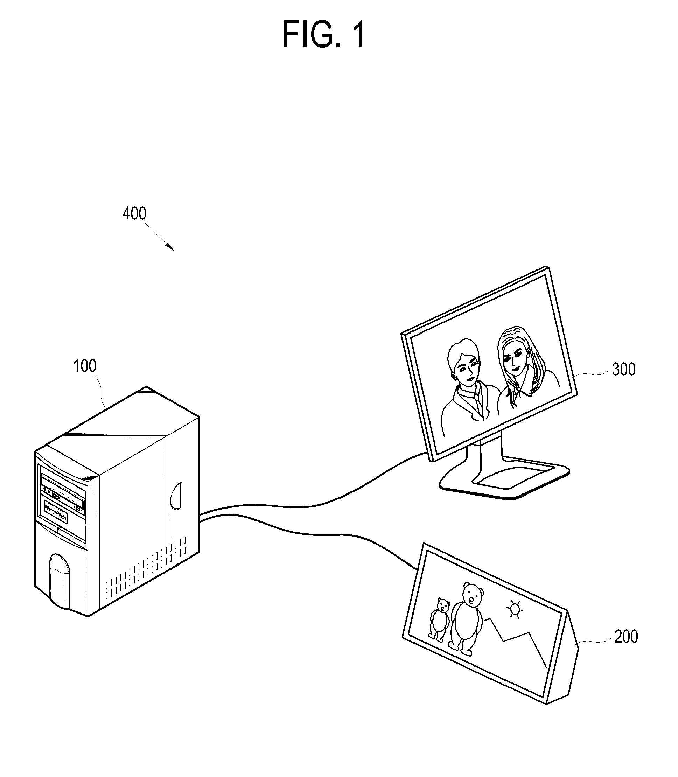

FIG. 1 is a perspective view of a display system according to an exemplary embodiment of the present invention.

As shown in FIG. 1, a display system 400 according to an exemplary embodiment of the present invention includes a computer 100, an electronic frame 200, and a monitor 300. The electronic frame 200 and the monitor 300 are connected with the computer 100.

The monitor 300 is typically a display apparatus, and the electronic frame 200 is a pseudo display apparatus.

The computer 100 and the monitor 300 communicate an image and a control signal with each other by using a VGA or DVI transmission method, and the computer 100 and the electronic frame 200 communicate an image and a control signal with each other by using a USB transmission method.

The monitor 300 receives an image signal from the computer 100, modifies the received image signal based on vertical and horizontal synchronization signals and display characteristics of the monitor 300, and displays the corresponding image on a display module (not shown). In addition, a power mode of the monitor 300 is set based on the vertical and horizontal synchronization signals received from the computer 100. The power mode referenced herein corresponds to a DPMS power mode defined by the Video Electronics Standards Association (VESA). The monitor 300 is set to one of a plurality of power modes based on a combination of the vertical and horizontal synchronization signals, and the amount of power consumption can be controlled in accordance with the set power mode of the monitor 300.

The electronic frame 200 receives an image signal from the computer 100 and displays the received image signal on the electronic frame 200. Whereas the monitor 300 modifies the received image signal in accordance with vertical and horizontal synchronization frequency and characteristics of the monitor 300, the electronic frame 200 displays an image generated by the computer 100.

The electronic frame 200 receives an image based on a power mode of the computer 100, displays the received image, receives a control signal including power mode information, and controls power consumption based on the power mode information.

According to this exemplary embodiment, the monitor 300 and the electronic frame 200 may display the same image or may display different images, respectively.

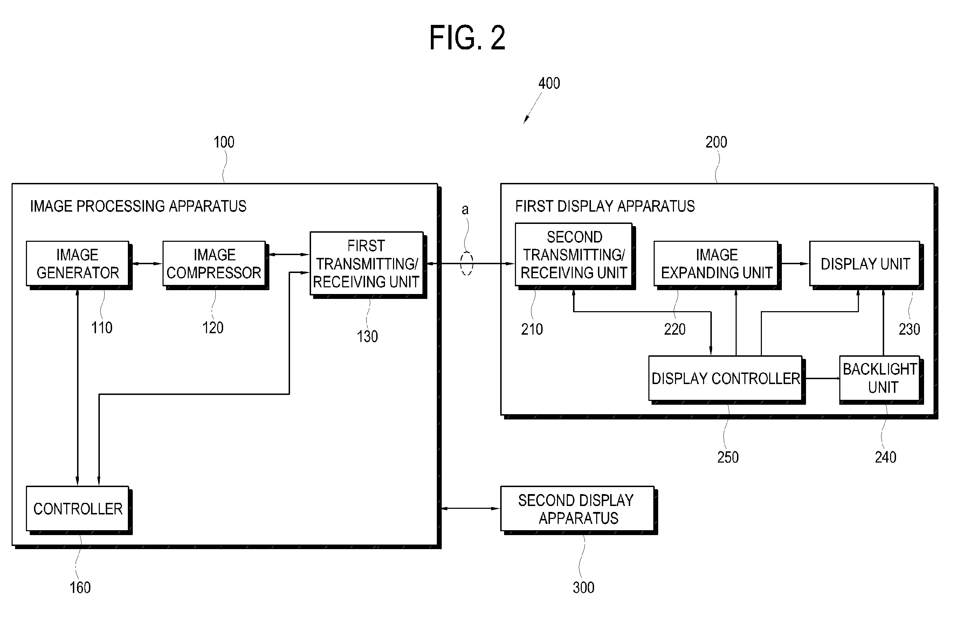

FIG. 2 is a block diagram of the display system according to an exemplary embodiment of the present invention.

As shown in FIG. 2, the display system 400 according to an exemplary embodiment of the present invention includes an image processing apparatus 100 that generates an image based on one of the plurality of power modes, and a first display apparatus 200, which receives the image generated by the image processing apparatus 100 and displays the received image.

According to this exemplary embodiment, the power mode may be classified as at least one of a plurality of power modes according to a predetermined specification, and the power mode includes a DPMS power mode standardized by the VESA.

In addition, the first display apparatus 200 includes a backlight unit 240 that emits light for displaying the image received from the image processing apparatus 100. The image processing apparatus 100 transmits a first control signal that includes power mode information. Moreover, the first display apparatus 200 further includes a display controller 250 that turns on/off the backlight unit 240 based on the first control signal received from the image processing apparatus 100. Although it is described in the present exemplary embodiment that the first display apparatus 200 includes the backlight unit 240 for displaying an image, this example is not restrictive. For instance, the first display apparatus 200 may include a light emitting diode, or the like, so as to emit light for displaying an image.

The image processing apparatus 100 and the first display apparatus 200 communicate at least one of an image and a control signal with each other by using a USB transmission method, for example. In addition, the image processing apparatus 100 and the first display apparatus 200 can transmit/receive a voice signal. That is, the image processing apparatus 100 and the first display apparatus 200, respectively, include first transmitting/receiving unit 130 and second transmitting/receiving unit 210, which may include USB ports, for instance. And, a USB cable a may be connected to the respective USB ports of the first and second display apparatuses so that the image, the control signal, and the voice signal can be transmitted/received through the USB cable a. The image processing apparatus 100 and the first display apparatus 200 may use a more improved data transmission method based on a universal data transmission standard as signal transmission technology improves.

The image processing apparatus 100 generates a compressed image that has been compressed to improve a data transmission rate and transmits the compressed image to the first display apparatus 200. The first display apparatus 200 receives the compressed image from the image processing apparatus 100, expands the image, and displays the expanded image. It is not necessary but preferable that the image processing apparatus 100 compress an image and transmit the compressed image.

The image processing apparatus 100 may be connected with a second display apparatus 300 in addition to the first display apparatus 200. The second display apparatus 300 may be provided as a computer monitor or a television, for example. In general, the image processing apparatus 100 and the second display apparatus 300 transmit/receive all signals by using a VGA-based transmission method, a DVI-based transmission method, or a high definition multimedia interface (HDMI)-based transmission method.

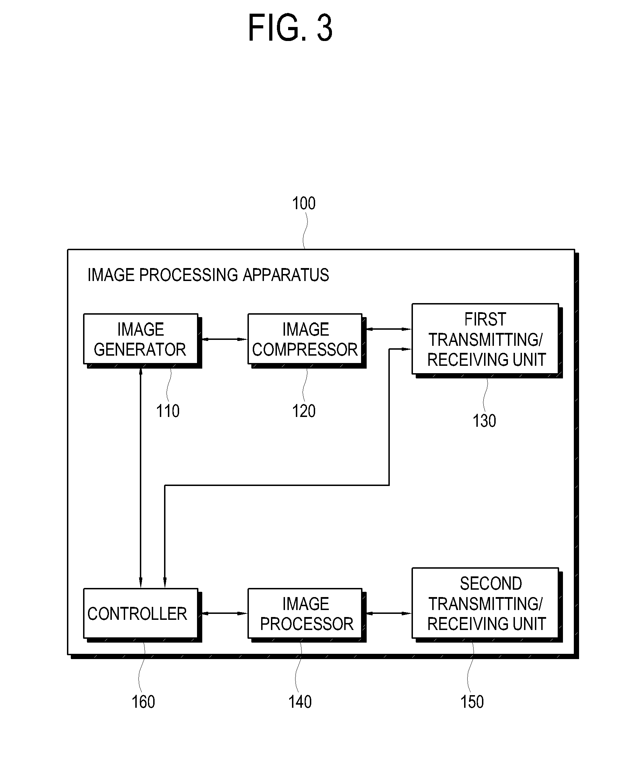

FIG. 3 is a block diagram of an image processing apparatus according to an exemplary embodiment of the present invention.

As shown in FIG. 3, the image processing apparatus 100 according to an exemplary embodiment of the present invention includes an image generator 110 which generates an image, a first transmitting/receiving unit 130 which transmits the image generated by the image generator 110 to the first display apparatus 200, and a controller 160 which controls the image generator 110 to transmit an image based on a power mode among a plurality of power modes through the first transmitting/receiving unit 130. Herein, the power mode can be classified as at least one of a plurality of power modes according to a predetermined specification. The predetermined specification includes, but is not limited to, a DPMS power mode, standardized by the VESA. The DPMS power mode may be classified as a normal mode, a standby mode, a suspended mode, and an off mode according to whether horizontal and/or vertical synchronization signals exist.

According to the present invention, the controller 160 may reduce the amount of power consumption of the first display apparatus 200 according to a power mode.

An internal operation mechanism performed by the controller 160 to control the power consumption of the first display apparatus 200 according to the power mode will be described in further detail below.

In terms of software, the controller 160 comprises an operation system (OS), an application program, and various device drivers. The controller 160 may connect the first display apparatus 200, such as an electronic frame, through a USB port. With respect to a power mode, the controller 160 includes an OS for determining a power mode, a DPMS image generator generating a predetermined image for the respective power modes, and a USB display driver which is a virtual device driver to perceive that the first display apparatus 200 is provided as a monitor like the second display apparatus 300. According to this exemplary embodiment, the DPMS image generator corresponds to the image generator 110 of FIG. 2. The DPMS image generator is a software application, and the USB display driver is a firmware. The USB display driver may include the DPMS image generator and may include the image compressor 120. Therefore, the USB display driver may correspond to the image generator 110.

The OS determines a current power mode of the image processing apparatus 100, and transmits a power mode signal to the DPMS image generator. The DPMS image generator receives the power mode signal and transmits a signal to a graphic device interface (GDI) module that is a part of the OS for generating a predetermined image. The GDI module then transmits the generated image to the USB display driver. The USB display driver modifies the image received from the GDI module based on a USB protocol and then transmits the image to a USB driver (not shown). The USB driver then transmits the image modified by using the USB protocol to the first display apparatus 200 through the first transmitting/receiving unit 130.

When receiving the power mode signal from the OS, the DPMS image generator transmits a first control signal to a USB display driver for controlling the backlight unit 240 provided in the first display apparatus 200. According to this exemplary embodiment, the first control signal includes current power mode information. The USB display driver modifies the first control signal by using the USB transmission protocol, and transmits the modified signal to the USB driver (not shown). The USB driver then transmits the first control signal to the first display 200 through the first transmitting/receiving unit 130.

In addition, the USB driver receives a response signal, in USB transmission protocol form, from the first display apparatus 200 responding to the image and the first control signal received by the first display apparatus 200. The USB driver then transmits the response signal to the USB display driver. Then, the USB display driver changes the protocol of the response signal from the USB transmission protocol to an internal signal protocol of the image processor and transmits the response signal of the changed protocol to the DPMS image generator. The DPMS image processor then passes the received signal to the OS. Consistent with the present invention, a system designer may decide whether the DPMS image generator receives a response signal from a USB display driver and performs the corresponding operation. The OS can determine a status of the first display apparatus 200 by receiving the response signal, and when the OS cannot receive the response signal, the OS may periodically or repeatedly transmit the image and the first control signal to the first display apparatus 200.

The first display apparatus 200 includes the backlight unit 240 that emits light so as to display the image received from the image generator 110. The controller 160 transmits the first control signal to the first display apparatus 200 so as to control the backlight unit 240 to be turned on/off based on the power mode. According to an exemplary embodiment, the first display apparatus 200 may use a light emitting diode (LED) to emit light for displaying an image rather than using the backlight unit 240.

At least one of the image and the first control signal is transmitted to and received from the first display apparatus 200 using the USB transmission method.

The image processing apparatus 100 further includes a first transmitting/receiving unit 130 connected with the first display apparatus 200. The first display apparatus 200 includes a second transmitting/receiving unit 210 connected with the first transmitting/receiving unit 130. The image and the first control signal are transmitted to the first display apparatus 200 through the first transmitting/receiving unit 130. A voice signal and other data signals can also be transmitted through the first transmitting/receiving unit 130. According to this exemplary embodiment, the first transmitting/receiving unit 130 and the second transmitting/receiving unit 210 can be provided with a USB port and connected through a USB cable 'a'. Consistent with the present invention, as a signal transmission method improves, an improved transmission method based on a universal data transmission standard may be applied, and the first transmitting/receiving unit 130 and the second transmitting/receiving unit 210 may become compatible with a new port or a separate port may be provided according to the improved transmission method.

The image processing apparatus 100 further includes an image compressor 120 that compresses an image. The image compressor 120 receives an image from the image generator 110, compresses the received image, and then transmits the compressed image to the first display apparatus 200 through the first transmitting/receiving unit 130. The image compressor 120 may be included in the image generator 110.

The image processing apparatus 100 further includes a second transmitting/receiving unit 150 connected with the second display apparatus 300, and transmits a second control signal to the second display apparatus 300 so as to control the second display apparatus 300 to generate an image based on the power mode and display the generated image.

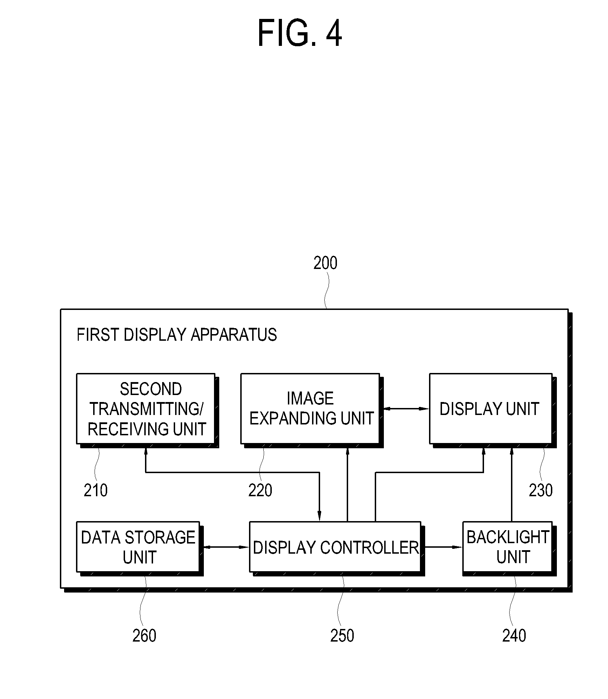

FIG. 4 is a block diagram of a first display apparatus 200 according to an exemplary embodiment of the present invention.

As shown in FIG. 4, the display apparatus 200 includes a second transmitting/receiving unit 210, a display unit 230, a backlight unit 240, and a display controller 250. The second transmitting/receiving unit 210 is connected with an image processing apparatus 100 having at least one of a plurality of power modes. The second transmitting/receiving unit 210 transmits/receives at least one of an image and a control signal to/from the image processing apparatus 100 by using a USB transmission method. The display unit 230 displays the image received through the second transmitting/receiving unit 210.

The backlight unit 240 emits light to the display unit 230 so as to display an image, and the display controller 250 turns on/off the backlight unit 240 based on information regarding a power mode of the received control signal. According to this exemplary embodiment, the power mode can be classified as at least one of a plurality of power modes according to a predetermined specification, and the predetermined specification includes, but is not limited to, a DPMS power mode defined by the VESA. The DPMS power mode is divided, for example, into a normal mode, a standby mode, a suspended mode, and an off mode, in accordance with existence of horizontal and vertical signals.

The display apparatus 200 further includes an image expanding unit 220 that receives the compressed image through the second transmitting/receiving unit 210 and expands the compressed image. The display controller 250 controls the image expanding unit 220 to expand the compressed image and to display the expanded image on the display unit 230.

The image processing apparatus 100 may be connected with another display apparatus 300, and an image displayed on the display unit 230 includes an image displayed on the other display apparatus 300.

The display apparatus 200 further includes a data storage unit 260 for storing data, and the display controller 250 displays image data stored in the data storage unit 260 on the display unit 230.

A display system according to an exemplary embodiment of the present invention will be described in further detail below.

As shown in FIG. 1, the image processing apparatus 100 is provided as the computer 100, the first display apparatus 200 is provided as the electronic frame 200, and the second display apparatus is provided as the monitor 300.

The computer 100 may be operated with a plurality of power modes according to a predetermined specification. The predetermined specification includes, but is not limited to, a DPMS power mode defined by the VESA. In the present exemplary embodiment, the specification is set to the DPMS power mode defined by the VESA.

The computer 100 enters one of the plurality of power modes. The power mode is classified as a normal mode, a standby mode, a suspended mode and an off mode included in the DMPS power mode defined by the VESA.

The computer 100 includes a first transmitting/receiving unit 130 connected with the electronic frame 200. The first transmitting/receiving unit 130transmits/receives an image, voice, and a first control signal The computer 100 further includes an image generator 110 for generating an image and transmitting the generated image to the electronic frame 200 through the first transmitting/receiving unit 130 Additionally, the computer 100 includes a second transmitting/receiving unit 150 connected with the monitor 300, an image processor 140 for transmitting an image signal to the monitor 300 through the second transmitting/receiving unit 150, and a controller 160 controlling the above constituent elements of the computer 100.

The first transmitting/receiving unit 130 transmits/receives an image, voice, and a first control signal to/from the electronic frame 200 based on a USB transmission method. Therefore, the first transmitting/receiving unit 130 may be provided as a USB port.

The first transmitting/receiving unit 130 is connected with a USB cable 'a'.

When the computer 100 enters one of the plurality of power modes, the controller 160 controls the image generator 110 to generate a predetermined image and transmit/receive one of the image and the first control signal to/from the electronic frame 200 through the USB port of the first transmitting/receiving unit 130.

The second transmitting/receiving unit 150 is provided with a port to which a cable is connected for communication with the monitor 300 based on a VGA transmission method or a DVI transmission method, for example. That is, the second transmitting/receiving unit 150 may be provided with a D-SUB port for an analog signal or a DVI port for a digital signal. In the present exemplary embodiment, the second transmitting/receiving unit 150 is provided with a D-SUB port.

The image processor 140 processes an image signal, and transmits the processed image signal and one of a vertical synchronization signal and a horizontal synchronization signal to the monitor 300 through the D-SUB port by control of the controller 160.

The controller 160 corresponds to a central processing unit of a computer. The controller 160 is provided inside the computer 100 and determines a current power mode of the computer 100. The controller 160 controls the image generator 110 and the image processor 140 in accordance with the current power mode.

The computer 100 may further include an image compressor 120 that receives the image generated by the image generator 110 and then compresses the received image. The image compressor 120 may be included in the image generator 110.

The electronic frame 200 includes a second transmitting/receiving unit 210, an image expanding unit 220, a display unit 230, a backlight unit 240, a data storage unit 260, and a display controller 250 for controlling these constituent elements 210, 220, 230, 240, and 260.

The second transmitting/receiving unit 210 is provided with a USB port connected with a USB cable 'a'.

The image expanding unit 220 expands the compressed image received through the USB port of the first transmitting/receiving unit 130 in the computer 100 and displays the expanded image on the display unit 230.

The backlight unit 240 emits light for displaying the image received from the computer 100 on the display unit 230. According to an exemplary embodiment of the present invention, the backlight unit 240 emits light, and may be replaced with a light emitting diode (LED) according to characteristics of the electronic frame 200. Therefore, the controller 160 can control the amount of light emission by turning on/off the backlight unit 240 or the LED.

The electronic frame 200 further includes the data storage unit 260. The data storage unit 260 may store image data. When the electronic frame 200 is not connected with the computer 100, the display controller 250 reads image data from the data storage unit 260 and displays the image data on the display unit 230.

The monitor 300 includes a microcomputer (not shown), a scaler (not shown), and a display panel (not shown). The display panel is a module on which an image is displayed, and includes, but is not limited to, a cathode ray tube (CRT) and a liquid crystal display (LCD). In addition, the monitor 300 may be provided as a digital television.

The computer 100 enters one of the plurality of power modes depending on how a user currently uses the computer 100. The controller 160 determines a power mode which the computer 100 enters, and performs a series of processes corresponding to the determined power mode.

The power mode can be classified as a normal mode, a standby mode, a suspended mode, and an off mode, for example.

When the normal mode is determined by the controller 160, the controller 160 reads image data from a storage unit (not shown), such as an internal/external hard disk or an external memory, transmits the read image data to the image generator 110, and controls the image generator 110 to generate an image. In addition, the controller 160 may receive an air-wave broadcasting signal, a terrestrial digital multimedia broadcasting (DMB) signal, and a satellite DMB signal. The controller 160 may capture the received image signal, convert the captured image signal to image data, and store the image data in a storage unit.

That is, the controller 160 may transmit captured image data to the image generator 110 and may control the image generator 110 to generate an image corresponding to the image data.

According to an exemplary embodiment, the image signal may be generated as a typical image, like a photo. The image generator 110 generates an image and transmits the image to the electronic frame 200 through the USB port 130. The image transmitted to the electronic frame 200 may be a compressed image or a non-compressed image.

Compression of the image is performed by the image compressor 120. Data transmitted to the electronic frame 200 may include, but is not limited to, an image signal, a first control signal, and a voice signal. When the computer 100 transmits the voice signal, the computer 100 should include a voice generator (not shown) for transmitting the voice signal. The voice generator may be included in the image generator 110, for example.

The controller 160 transmits the first control signal to the electronic frame 200. According to an exemplary embodiment, the first control signal includes information regarding a current power mode. If the current power mode is set to the normal mode, then the information regarding the power mode indicates the normal mode.

When the current power mode is set to the normal mode, the controller 160 transmits a second control signal including a vertical synchronization signal and a horizontal synchronization signal.

The display controller 250 of the electronic frame 200 receives the image and the first control signal through the USB port of the second transmitting/receiving unit 210 to which the USB cable a is connected. The display controller 250 displays the image on the display unit 230. In addition, the display controller 250 turns on the backlight unit 240 since the power mode information received through the first control signal indicates the normal mode. As such, the display unit 230 displays the received image.

The electronic frame 200 further includes the image expanding unit 220, and when the received image is a compressed image, the display controller 250 controls the image expanding unit 220 to expand the compressed image and then displays the expanded image. According to an exemplary embodiment, the image expanding unit 220 may be included in the display controller 250.

The controller 160 of the computer 100 transmits at least one of image data, voice data, the vertical synchronization signal, and the horizontal synchronization signal. The controller 160 controls the image processor 140 to process an image signal to transmit the image signal. In addition, the controller 160 may control a voice processor (not shown) for transmitting a voice signal.

The monitor 300 receives the at least one of the image signal, the voice signal, the vertical synchronization signal, and the horizontal synchronization signal through the second transmitting/receiving unit 150. The microcomputer (not shown) provided inside the monitor 300 generates an image by changing the image signal according to characteristics of the monitor 300 and then displays the generated image. After receiving the vertical synchronization signal and the horizontal synchronization signal, the monitor 300 does not perform any operation so as to save power.

When the power mode of the computer 100 is set to the standby mode by the controller 160, the controller 160 reads image data from a storage unit (not shown) such as an internal/external hard disk or an external memory, transmits the read image data to the image generator 110, and controls the image generator 110 to generate an image according to the image data. The image generated by the image generator 110 can indicate that the current power mode is not the normal mode. In general, a black image indicates that a current power node is not the normal mode. Thus, the image generator 110 may generate a black image and transmit the black image to the electronic frame 200 through the USB port 130. When the computer 100 transmits a voice signal to the electronic frame 200, the computer 100 may further include a voice generator (not shown) for generating voice signals.

In addition, the controller 160 transmits a first control signal to the electronic frame 200 through the USB port of the first transmitting/receiving unit 130. According to an exemplary embodiment, the first control signal includes information indicating that the current power mode is the standby mode.

The display controller 250 of the electronic frame 200 receives the black image and the first control signal through the USB port of the second transmitting/receiving unit 210. The display controller 250 displays the black image on the display unit 230, and determines the power mode included in the first control signal. The display controller 250 turns off the backlight unit 240 or reduces brightness of the backlight unit 240 after determining that the power mode is set to the standby mode. Accordingly, power consumption of the backlight unit 240 of the electronic frame 200 can be reduced.

In addition, the controller 160 transmits a second control signal including a vertical synchronization signal to the monitor 300 so as to inform that the current power mode is set to the standby mode. According to an exemplary embodiment, unlike the normal mode, the horizontal synchronization signal is not transmitted to the monitor 300. The controller 160 can control the image processor 140 and the voice processor (not shown) to read image data or voice data stored in the storage unit provided inside the computer 100, to generate an image signal or a voice signal, and to transmit the image or voice signal. However, when the current power mode is not set to the normal mode, the controller 160 transmits only the second control signal to the monitor 300.

The monitor 300 receives a predetermined image signal, generates an image by changing the image signal according to the characteristics of the monitor 300, and displays the image. In addition, the monitor 300 may reduce power consumption needed for the horizontal synchronization since it receives only the vertical synchronization signal. The amount of power consumption in the standby mode is less than in the normal mode and greater than the suspended mode.

When the power mode of the computer 100 is set to the suspended mode, or is set to the off mode by the controller 160, the controller 160 reads image data from the storage unit (not shown) such as the internal/external hard disk or the external memory, transmits the read image data to the image generator 110, and controls the image generator 110 to generate an image corresponding to the image data. According to an exemplary embodiment, the image generator 110 may generate a black image. In addition, the controller 160 transmits a first control signal to the electronic frame 200 through the USB port of the first transmitting/receiving unit 130. According to one exemplary embodiment, the first control signal includes information indicating that the current power mode is set to the suspended mode or the off mode.

The display controller 250 of the electronic frame 200 receives the black image and displays the black image on the display unit 230. The display controller 250 determines the power mode included in the first control signal and turns off the backlight unit 240 to block light emitted to the display unit 230 when the power mode is set to the suspended mode or the off mode. Therefore, the display controller 250 can reduce power consumption needed for light emission of the backlight unit 240 when the power mode is set to the suspended mode or the off mode.

In addition, the controller 160 transmits a second control signal including the horizontal synchronization signal to the monitor 300 so as to indicate that the power mode is set to the suspended mode. According to an exemplary embodiment, the controller 160 may control the image processor 140 and the voice processor (not shown) to read the image data or voice data stored in the storage unit provided in the computer 100, generate an image signal or a voice signal, and transmit the image signal or the voice signal. However, the controller 160 transmits only the second control signal to the monitor 300 when the power mode is not set to the normal mode.

The monitor 300 receives the second control signal, generates an image corresponding to the suspended mode, and displays the generated image. The image displayed on the monitor 300 is the same as the image displayed on the electronic frame 200.

When the power mode is set to the off mode, the controller 160 transmits a second control signal to the monitor 300 so as to inform that the power mode is set to the off mode. According to an exemplary embodiment, the second control signal does not include either the horizontal synchronization signal or the vertical synchronization signal. The controller 160 may control the image processor 140 and the voice processor (not shown) to read the image data or voice data stored in the storage unit provided in the computer 100, generate an image signal or a voice signal, and transmit the image signal or the voice signal. When the current power mode is not set to the normal mode, the controller 160 transmits only the second control signal to the monitor 300.

The monitor 300 receives the second control signal and determines that the current power mode is set to the off mode by determining the horizontal synchronization signal and the vertical synchronization signal are not included in the second control signal. The monitor 300 then generates a predetermined image corresponding to the off mode and displays the image. According to an exemplary embodiment, the predetermined image may be the black image.

Therefore, when the power mode is set to the suspended mode, the monitor 300 can save power that would be consumed for the vertical synchronization signal, and when the power mode is set to the off mode, the monitor 300 can save power that would be consumed for the vertical and horizontal synchronization signals.

When the power mode of the computer 100 is set to a power mode other than the normal mode, an image displayed on the monitor 300 and an image displayed on the electronic frame 200 may be different from each other, but the two images may be the same. A user can determine a current power mode of the computer 100 through the images displayed on the electronic frame 200 and the monitor 300.

When the power mode of the computer 100 is set to the normal mode, the images displayed on the monitor 300 and the electronic frame 200 may be the same, but generally, the two images are different from each other.

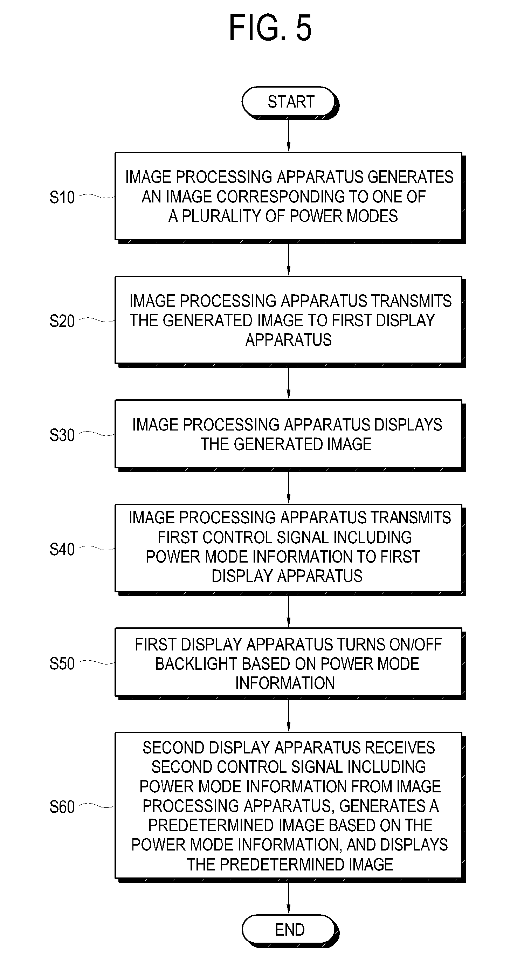

FIG. 5 is a flowchart showing a display method using an image processing apparatus having a plurality of power modes and a first display apparatus connected with the image processing apparatus, consistent with an exemplary embodiment of the present invention.

As shown in FIG. 5, the image processing apparatus generates an image corresponding to one of the plurality of power modes (S10). The image processing apparatus then transmits the generated image to the first display apparatus (S20). The first display apparatus receives and displays the generated image (S30). The image processing apparatus transmits a first control signal including information regarding a current power mode to the first display apparatus (S40). The first display apparatus turns on/off a backlight unit based on the information regarding the current power mode (S50). A second display apparatus may also be connected to the image processing apparatus, and the second display apparatus receives a second control signal including information regarding the current power mode from the image processing apparatus, generates a predetermined image based on received information, and displays the predetermined image (S60).

According to an exemplary embodiment, the current power mode may be classified as at least one of a plurality of power modes according to a predetermined specification, and may include a DPMS power mode defined by the VESA.

The image processing apparatus and the first display apparatus transmit/receive at least one of the image and the first control signal by using the USB transmission method. In addition, the voice signal can be transmitted by using the USB transmission method.

The image processing apparatus can generate a compressed image, transmit the compressed image to the first display apparatus, expand the compressed image received from the image processing apparatus, and display the expanded image.

The image processing apparatus may be connected with the second display apparatus, and the second display apparatus may receive a second control signal including information regarding the power mode from the image processing apparatus, generate a predetermined image based on the power mode information, and display the predetermined image.

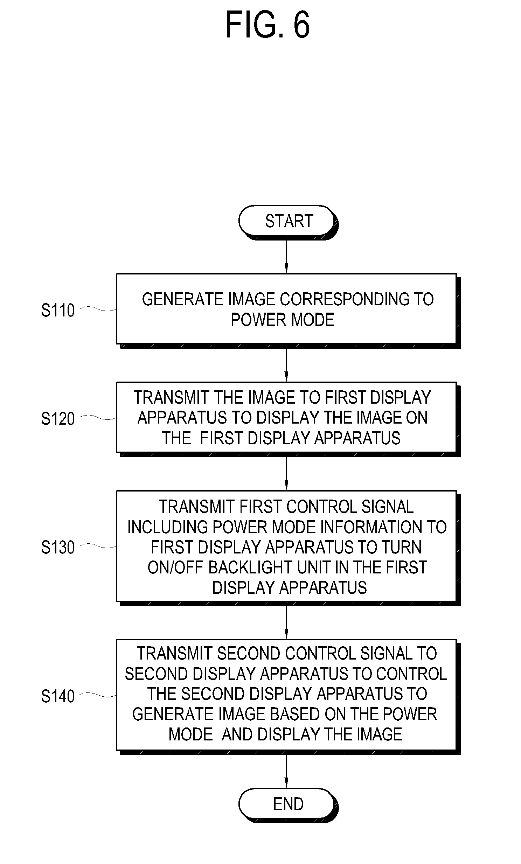

FIG. 6 is a flowchart showing a control method of an image processing apparatus connected with a first display apparatus and having at least one of a plurality of power modes, consistent with an exemplary embodiment of the present invention.

As shown in FIG. 6, an image corresponding to one of the plurality of power modes is generated (S110). The image is transmitted to the first display apparatus to be displayed on the first display apparatus (S120). In order to turn on/off a backlight unit provided in the first display apparatus, a first control signal including power mode information is transmitted to the first display apparatus (S130). The image processing apparatus may be further connected with a second display apparatus, and a second control signal is transmitted to the second display apparatus so that the second display apparatus generates an image based on the power mode and displays the image (S140). According to this exemplary embodiment, the second control signal includes at least one of a horizontal synchronization signal and a vertical synchronization signal.

The power mode may be classified as at least one of a plurality of power modes, and may include a DPMS power mode defined by the VESA.

According to an exemplary embodiment, the control method may further include compressing an image and transmitting the compressed image to the first display apparatus.

At least one of the image and the first control signal is transmitted to and received from the first display apparatus by using the USB transmission method. In addition, voice data can be transmitted/received by using the USB transmission method.

The image processing apparatus may be connected with the second display apparatus, and a second control signal may be transmitted to the second display apparatus so that the second display apparatus can generate an image based on a power mode and display the image. According to an exemplary embodiment, the second control signal includes at least one of the horizontal synchronization signal and the vertical synchronization signal.

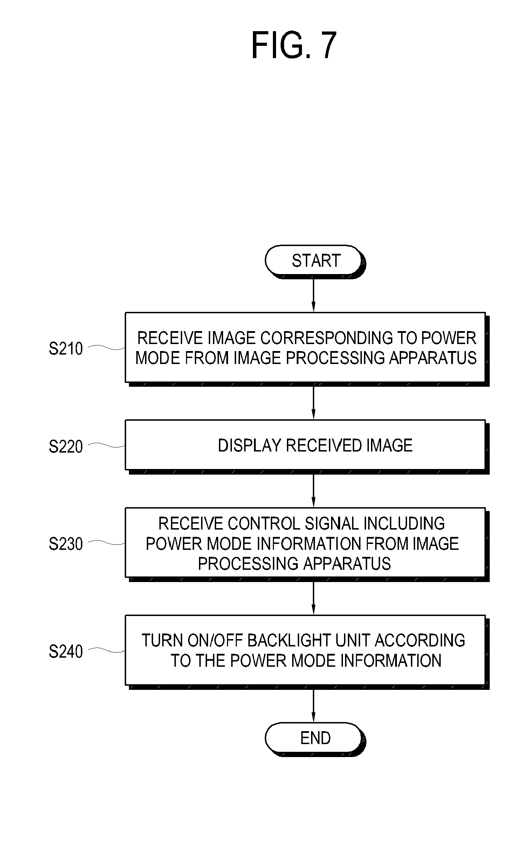

FIG. 7 is a flowchart showing a control method of a display apparatus which is connected with an image processing apparatus having a plurality of power modes and includes a backlight unit that emits light for displaying an image received from the image processing apparatus.

As shown in FIG. 7, an image corresponding to a power mode is received from the image processing apparatus (S210). Then, the received image is displayed (S220). A control signal including power mode information is received from the image processing apparatus (S230). Finally, the backlight unit is turned on/off corresponding to the power mode information (S240).

According to an exemplary embodiment, the power mode can be classified as at least one of a plurality of power modes according to a predetermined specification, and the power mode may include a DPMS power mode defined by the VESA.

At least one of the image and the control signal is transmitted to and received from the image processing apparatus by using the USB transmission method. In addition, voice data can be transmitted/received by using the USB transmission method.

The control method further includes determining whether the image received from the image processor is a compressed image, and expanding the image if it is compressed.

The image processing apparatus may be provided not only as a computer but also as a personal digital assistant (PDA) or a cellular phone according to other exemplary embodiments of the present invention. In addition, the display apparatus is a pseudo display apparatus such as an electronic frame, and may include other apparatuses having an image display function similar to the display apparatus. A display module on which an image is displayed may also include, but is not limited to, an LCD, a PDP, and a CRT.

As described above, a display method using a display system, an image processing apparatus, and a display apparatus according to exemplary embodiments of the present invention enable controlling power consumption of a pseudo display apparatus in accordance with a plurality of power modes.

Although a few exemplary embodiments of the present invention have been shown and described, it will be appreciated by those skilled in the art that numerous changes or modifications may be made to these exemplary embodiments without departing from the principles and spirit of the invention, the scope of which is defined in the appended claims and their equivalents.

## Claims

1. A display system comprising:
an imaging processing apparatus which generates an image in accordance with one power mode of a plurality of power modes; and
a first display apparatus which receives the image from the image processing apparatus and displays the image.

2. The display system of claim 1, wherein the power mode comprises a display power management signaling power mode defined by the Video Electronics Standards Association.

3. The display system of claim 2, wherein the first display apparatus comprises a light source unit that emits light for displaying the received image,
wherein the image processing apparatus transmits a first control signal comprising information regarding the power mode, and
wherein the first display apparatus further comprises a display controller which controls the light source unit in accordance with the first control signal received from the image processing apparatus.

4. The display system of claim 1, wherein the image processing apparatus transmits/receives at least one of the image and a first control signal comprising information regarding the power mode, to/from the first display apparatus by using a universal serial bus.

5. The display system of claim 4, wherein the image processing apparatus generates a compressed image by compressing the image,
wherein the image processing apparatus transmits the compressed image to the first display apparatus, and
wherein the first display apparatus expands the compressed image received from the image processing apparatus and displays the expanded image.

6. The display system of claim 5, further comprising a second display apparatus connected to the image processing apparatus.

7. The display system of claim 1, wherein the first display apparatus comprises an electronic frame.

8. The display system of claim 3, wherein the display controller controls the light source unit in accordance with the existence of a vertical synchronization signal and a horizontal synchronization signal.

9. A display apparatus connected with an image processing apparatus having one power mode among a plurality of power modes, the display apparatus comprising:
a receiving unit which receives an image and a control signal from the image processing apparatus by using a universal serial bus ;
a display unit which displays the image received by the receiving unit;
a light source unit which emits light to the display unit for displaying the image; and
a display controller which controls the light source unit in accordance with information regarding the power mode, which is included in the control signal received from the image processing apparatus.

10. The display apparatus of claim 7, wherein the power mode comprises a display power management signaling power mode defined by the Video Electronics Standards Association.

11. The display apparatus of claim 8, further comprising an image expanding unit which receives a compressed image from the receiving unit and expands the compressed image,
wherein the display controller controls the image expanding unit to expand the compressed image and display the expanded image on the display unit.

12. The display apparatus of claim 9, wherein the image processing apparatus is connected with a second display apparatus, and
wherein an image displayed on the display unit comprises an image displayed on the second display apparatus.

13. The display apparatus of claim 8, wherein the image processing apparatus is connected with a second display apparatus, and
wherein an image displayed on the display unit comprises an image displayed on the second display apparatus.

14. The display apparatus of claim 11, further comprising a data storage unit which stores data,
wherein the display controller displays image data stored in the data storage unit on the display unit.

15. The display apparatus of claim 10, further comprising a data storage unit which stores data,
wherein the display controller displays image data stored in the data storage unit on the display unit.

16. A method for controlling a display apparatus which is connected with an image processing apparatus having a plurality of power modes and comprises a light source unit which emits light to display an image received from the image processing apparatus, the method comprising:
receiving an image corresponding to a power mode of the plurality of power modes from the image processing apparatus;
displaying the received image;
receiving a control signal which comprises information regarding the power mode from the image processing apparatus; and
controlling the light source unit in accordance with the power mode information.

17. The method of claim 14, wherein the power mode comprises a display power management signaling power mode defined by the Video Electronics Standards Association.

18. The method of claim 15, wherein at least one of the image and the control signal is received from the image processing apparatus by using a universal serial bus transmission method.

19. The method of claim 16, further comprising:
determining whether the image received from the image processing apparatus is a compressed image; and
expanding the image, if the received image is a compressed image.
